# EUROPÄISCHE PATENTSCHRIFT

(11) **EP 2 463 563 B1**
(45) Veröffentlichungstag und Bekanntmachung des Hinweises auf die Patenterteilung: **18.09.2013**
(21) Anmeldenummer: 12154094.2
(22) Anmeldetag: 21.09.2006
(51) Int. Cl.: F16L 3/205

(54) **Konstantträger**
Constant bearer
Support a force portante constante

(30) Priorität: 23.09.2005 DE 102005045736
(43) Veröffentlichungstag der Anmeldung: 13.06.2012
(62) Teilanmeldung aus: 06805329.7
(73) Patentinhaber: Lisega Aktiengesellschaft, 27404 Zeven (DE)
(72) Erfinder: Hardtke, Hans-Herlof, 27404 Zeven (DE)
(74) Vertreter: Lippert, Stachow & Partner

(56) Entgegenhaltungen:
- EP-A1- 0 306 786
- FR-A1- 2 286 330
- GB-A- 893 203
- US-A- 2 535 305
- US-A- 3 588 010

## Beschreibung

Die Erfindung betrifft einen Konstantträger für sich verschiebende Lasten, insbesondere für Rohrleitungen und dergleichen, mit einem Befestigungsteil, einem Lasttrageteil und einem zwischen dem Befestigungsteil und dem Lasttrageteil angeordneten Federsystem zur Erzeugung einer konstant bleibenden Tragekraft, wobei das Federsystem eine die Last aufnehmende Hauptfederung und eine Kompensationsvorrichtung (K) zur Kompensation von sich ändernden Federkräften der Hauptfederung (9) auf das Lasttrageteil (3) aufweist, wobei die Kompensationsvorrichtung mindestens ein Kurventeil (12) aufweist, dass das Kurventeil (12) zur Kraftübertragung von der Hauptfederung (9) auf das Lasttrageteil (3) mit der Hauptfederung (9) und dem Lasttrageteil (3) gekoppelt ist und dass mit Verschieben des Lasttrageteiles (3) über den Verschiebeweg (w) das Lasttrageteil (3) und das Kurventeil (12) auf einem nichtlinearen Weg relativ zueinander so bewegbar sind, dass eine vollständige Kompensation der sich ändernden Federkräfte der Hauptfederung (9) auf das Lasttrageteil (3) erzielbar ist.

Konstantträger werden eingesetzt, um auf eine von ihnen getragene Last trotz Verschiebung derselben zum Konstantträger stets eine konstante Tragekraft auszuüben. Für ein konstantes Tragekraftverhalten des Konstantträgers ist eine möglichst weitgehende Kompensation der sich ändernden Federkräfte der Hauptfederung auf das Lasttrageteil notwendig.

Aus der EP 0 306 786 A1 ist ein gattungsgemäßer Konstantträger bekannt, bei dem das Lasttrageteil und die Hauptfederung gemeinsam über eine Rolle an dem Kurventeil geführt sind, wobei sie in bzw. mit der Rolle eine gemeinsame Schwenk/Drehachse aufweisen. Die Hauptfederung wird mit Abrollen der Rolle entsprechend der Ausbildung des Kurventeils nicht linear zusammengedrückt bzw. entspannt, welches eine Kompensation der sich ändernden Federkräfte ermöglicht.

In der US 2 535 305 A wird ein Konstantträger mit einer Zusatzfederung zur Kompensation vorgeschlagen, die, abhängig von der Auslenkung der Hauptfederung, die Federkraft derselben verstärkt oder derselben entgegenwirkt.

Die FR 2 286 330 A offenbart einen Konstantträger mit einer Hauptfederung, deren Federkraft über eine Rolle auf eine Kurvenscheibe übertragen wird, die ihrerseits ortsfest mit dem Lasttrageteil verbunden ist.

In der US 3 588 010 A sind bei dem Konstantträger zur Kompensation der sich ändernden Federkräfte Zusatzfederungen vorgesehen, die jeweils schwenkbeweglich kraftseitig an dem Befestigungsteil und schwenkbeweglich lastseitig an dem Lasttrageteil angelagert sind.

Die GB 893 203 A offenbart einen Träger mit einer Hauptfederung, deren Federkraft über einen Dreipunkthebel auf das Lasttrageteil übertragen wird.

Der Erfindung liegt daher die Aufgabe zugrunde, einen Konstantträger der eingangs genannten Art bereitzustellen, der eine verbesserte Kompensation der sich ändernden Federkräfte der Hauptfederung auf das Lasttrageteil ermöglicht.

Die gestellte Aufgabe wird erfindungsgemäß durch die Merkmale des kennzeichnenden Teils des Anspruches 1 gelöst. Sie wird dadurch gelöst, dass das Kurventeil mindestens einen als Kurvenhebel ausgebildeten und an dem Befestigungsteil verschwenkbar gelagerten Hebel mit zwei einander gegenüberliegenden Seitenflächen in seiner Längserstreckung, einer erste Seitenfläche und eine zweite Seitenfläche, aufweist, dass die Hauptfederung mit ihrer Lastseite an der ersten Seitenfläche verschwenkbar angelagert ist oder sich an dieser abstützt und dass die zweite Seitenfläche als Kurvenseitenfläche ausgebildet ist, an der das Lasttrageteil verschieblich oder abrollbar anliegt.

Der Verlauf oder das Profil des Kurventeiles bzw. des nichtlinearen Weges, welcher eine vollständige Kompensation der Änderung der Federkräfte über den Federweg der Hauptfederung ermöglicht, kann, mittels beispielsweise einer Federkennlinie des Federsystemes über den Verschiebeweg als Grundlage, iterativ exakt berechnet werden. Der berechnete Verlauf kann zum Beispiel mittels programmierbarer NC- oder CNC-Maschinen auf das Kurventeil übertragen werden. Abhängig von einer kostenverträglichen und technisch möglichen Perfektion der Ausbildung des nichtlinearen Weges kann die Kompensation sich innerhalb eines bestimmten Fehlerrahmens bewegen und somit eventuell nahezu vollständig sein.

Die Hauptfederung kann zur Kraftübertragung kraft- und/oder formschlüssig an dem Kurventeil angreifen. Hierzu kann sich die Hauptfederung, weiter unten detaillierter beschrieben, mit einem Lastende an dem Kurventeil abstützen oder verschwenkbar an demselben angelagert sein.

Vorzugsweise kann die Hauptfederung eine etwa senkrecht zur Tragekraft angeordnete Hauptdruckfederung aufweisen. Dies erlaubt eine Reduktion in der Bauhöhe des Konstantträgers.

Damit die Relativbewegung möglichst reibungsfrei erfolgen kann, kann das Lasttrageteil eine Lastrolle mit einer Drehachse senkrecht zur Federachse und senkrecht zur Tragekraftrichtung aufweisen und die Kurvenseitefläche in einer Ebene senkrecht zur Drehachse abrollbar an der Lastrolle anliegen.

Vorzugsweise liegt die Kurvenseitenfläche an dem Lasttrageteil mit einem sich über den Verschiebeweg ändernden Bereich an, der mit einem sich über den Verschiebeweg ändernden Betrag von einem als Lasttrageende ausgebildeten Ende des Lasttrageteiles zum Anordnen der Last abgewandt ist. Somit liegt das Lasttrageteil bevorzugt mit seiner Lastrolle in jedem Punkt über den Verschiebungsweg so an der Kurvenseitenfläche an, dass über diese eine Kraft in Tragkraftrichtung zum Halten der Last auf das Lasttrageteil übertragen werden kann. Je stärker der Bereich von dem Lasttrageende abgewandt ist, desto größer ist der Anteil der von der Druckfederung übertragenen Federkraft in Tragekraftrichtung. Vorzugsweise ist der Konstantträger so eingestellt, dass die Hauptdruckfederung bei einer mittleren Verschiebestellung über den Verschiebeweg mit einer mittleren Federkraft zusammengedrückt ist und eine bestimmte Federkraft in Tragkraftrichtung auf das Lasttrageteil übertragen wird. Wird die Hauptdruckfederung mit Fortschreiten auf dem Verschiebeweg weiter entspannt, so erniedrigt sich die Federkraft stärker als direkt proportional zu ihrem Federweg. Zum Ausgleich hierzu kann über eine stärkere Abwendung des Bereiches von dem Lasttrageende durch Verschwenken des oder der Schwenkhebel der Anteil in Tragekraftrichtung der auf das Lasttrageteil übertragenen Federkraft so vergrößert werden, dass die Tragekraft an sich konstant bleibt. In gleicher Weise gilt dies bei einem stärkeren Zusammendrücken der Hauptdruckfedern, deren Federkraft dann stärker als direkt proportional zu ihrem Federweg erhöht wird, wobei zum Ausgleich über eine stärkere Zuwendung des Bereiches von dem Lasttrageende durch Verschwenken des oder der Schwenkhebel der Anteil in Tragekraftrichtung der auf das Lasttrageteil übertragenen Federkraft so verringert werden, dass die Tragekraft an sich konstant bleibt.

In einer vorteilhaften Weiterbildung des Konstantträgers weist die Hauptdruckfederung zwei Hauptdruckfedern auf, die mit ihrer Lastseite symmetrisch auf das Lasttrageteil einwirken. Durch die Symmetrie kann ein Kräftegleichgewicht der Federkräfte unter Vermeidung zusätzlicher Kraftmomente erzielt werden. Ferner kann, wie insbesondere aus der Zeichnung ersichtlich, eine Zentrierung des Hebelmechanismus und eine Selbststabilisierung der Konstantträger erfolgen, welches eine ruhige Anhängung oder Auflastung der Last ermöglicht.

Das Befestigungsteil kann eine Befestigungsvorrichtung zur Befestigung des Konstantträgers an einer Basis umfassen. Ferner kann das Befestigungsteil ein Gehäuse aufweisen, das das Lasttrageteil und das Federsystem seitlich umschließt und damit schützt. Das Gehäuse kann ferner Seitenwände aufweisen, die Haltepunkte und/oder Lagerungspunkte für das Federsystem umfassen. Der Konstantträger kann, wie im Stand der Technik beschrieben, als Konstanthänger ausgelegt sein. Der Konstantträger kann aber auch als Konstantstütze mit konstanter Drucktragekraft ausgelegt sein. Da die Tragekraft, sei es als Druck - oder als Zugkraft, durch ein von der Schwerkraft unabhängiges Federsystem kompensiert werden kann, kann der Konstantträger auch in beliebiger Lage im Raum eingesetzt werden.

In einer bevorzugten Weiterbildung der Hauptdruckfederung sind die Hauptdruckfedern auf einer gemeinsamen Federachse angeordnet. Ferner kann vorgesehen sein, dass sich die Hauptdruckfedern einander gegenüberliegend mit ihrer Lastseite an dem Kurventeil und mit einer Befestigungsseite an dem Befestigungsteil abstützen.

Das Kurventeil kann in einer Ausführungsform des Konstanthängers für jede Hauptdruckfeder eine zugeordnete Kurvenseitenfläche aufweisen. Dazu kann das Kurventeil eine Öffnung aufweisen oder als eine eine Öffnung umschließende Konstruktion ausgelegt sein, wobei die Federn an der Innenseite der Öffnung angreifen. Hierzu sollen die Innenseiten als Kurvenseitenflächen ausgelegt sein, an denen die Federn lastseitig abgleiten oder sich in anderer Weise relativ zu den Kurvenseiten flächen bewegen. Da konstruktiv unaufwendiger und Platz sparend, wird eine Ausführungsform des Konstantträgers bevorzugt, in der das Kurventeil zwischen den Hauptdruckfedern angeordnet ist.

Bevorzugt sind die Hauptdruckfedern hinsichtlich ihrer Kennlinien gleich. Als Hauptdruckfedern werden zudem Schraubenfedern bevorzugt.

Die Hauptdruckfedern können in Widerlagern, einem ersten Lastwiderlager oder einem zweiten Lastwiderlager, an der Lastseite und einem Befestigungswiderlager an der Befestigungsseite der Hauptdruckfedern, gelagert sein.

Zur Verminderung der Reibung bei der Relativbewegung zwischen der Lastseite der Hauptfederung und des Kurventeiles kann insbesondere bei dem Konstanthänger mit Zusatzfederung lastseitig der Hauptdruckfedern jeweils ein erstes Lastwiderlager mit einer drehbar gelagerten Rolle oder Walze mit einer Drehachse senkrecht zur Federachse und zur Tragekraftrichtung vorgesehen sein, über welche sich die Hauptdruckfedern an dem Kurventeil abrollbar abstützen.

Bei dem Konstanthänger kann vorteilhaft vorgesehen sein, dass jeder Hauptdruckfeder ein Kurvenhebel zugeordnet ist. Ferner kann sich jeweils eine Hauptdruckfeder in einem Abstützbereich der ersten Seitefläche eines der Kurvenhebel in dem zweiten Lastwiderlager abstützen. Vorteilhafterweise können die Kurvenhebel jeweils in einem vom Abstützbereich in Tragelastrichtung entfernten Bereich an dem Befestigungsteil in einer Schwenkebene parallel zu oder in Federachse und zur Tragekraftrichtung verschwenkbar gelagert sein.

Beide Kurvenhebel können mit ihren Kurvenseitenflächen an dem Lasttrageteil verschieblich oder abrollbar anliegen. Hierzu kann jedem Kurvenhebel eine Lastrolle zugeordnet sein. Die Lastrollen können auf einer gemeinsamen Lastrollenachse drehbar angeordnet sein, wobei diese zweckmäßigerweise einzeln drehbar auf der Lastrollenachse positioniert sind. Somit wird eine weiter kompakte Bauweise des Konstantträgers möglich. Hierbei sind die Kurvenseitenflächen in Einbaulage und Betrieb zweckmäßigerweise so ausgerichtet, dass sie in jeder Verschiebeposition des Lasttrageteiles über den Verschiebeweg eine Kraft mit einer Kraftkomponenten Fₛ in Tragkraftrichtung und einer Kraftkomponenten in Richtung der Federachse f und senkrecht zur Kraftkomponente auf die Rollen ausüben können. Hierbei können sich die Kraftkomponenten in Richtung der Federachse dank eines bevorzugt symmetrischen Aufbaues bzw. dank einer bevorzugt symmetrischen Anordnung der Hauptdruckfedern aufheben und zusammen mit der anhängenden Last für den Zusammenhalt den einzelnen beweglichen Teile des Konstantträgers sorgen.

Die Kurvenseitenflächen können so profiliert sein, dass die Kraftkomponente in Tragkraftrichtung von einer unteren Verschiebeposition, in der das Lasttrageteil maximal zu der Last hin verfahren ist, zu einer oberen Verschiebeposition hin, in der das Lasttrageteil maximal in Richtung von der Last weg verfahren ist, kontinuierlich und nichtlinear in einem errechneten Maße so zunimmt, dass die sich ändernden Federkräfte der Hauptfederung beim Zusammendrücken bzw. Auseinandergehen derselben kompensiert werden. Somit kann eine über den Verschiebeweg konstante Tragekraft auf die hier nicht dargestellte, angehängte Last wirkende erzielt werden.

Zweckmäßigerweise ist eine Führung der Hauptdruckfedern über ihren Federweg vorgesehen.

Die Führung kann einen Hebel für jede Hauptdruckfeder aufweisen, der mit einem Ende an der Lastseite der jeweiligen Hauptdruckfeder und mit dem anderen Ende in einem in Tragelastrichtung entfernten Schwenkpunkt an dem Befestigungsteil verschwenkbar gelagert ist.

Hierdurch wird die Hauptdruckfeder lastseitig über ihren Federweg geführt, wobei die Hauptdruckfeder konstruktionsbedingt über den Hebel lastseitig eine Schwenkbewegung ausführt, die von der Hebellänge sowie von der Lage des Schwenkpunktes am Befestigungsteil abhängt. Somit kann sich eine Federkraftrichtung, d.h. die Richtung, in die die Federkraft einer Druckfeder wirkt, entsprechend ändern. Zur Abhilfe kann beispielsweise gleichzeitig mit dem Verschwenken die Befestigungsseite der betreffenden Druckfeder so bezüglich des Befestigungsteiles verschoben werden, dass die Federachse der Hauptdruckfedern lediglich parallel verschoben wird. Als vorteilhafter wird die Möglichkeit angesehen, dass eine Kompensation der sich ändernden Federkräfte durch das Verschwenken der Hauptdruckfedern über die Ausbildung des Kurventeiles erfolgt, gegen das sich die Hauptdruckfederung oder, allgemeiner, die Hauptfederung abstützt. Somit kann in einer Ausführungsform des Konstantträgers das Kurventeil so ausgelegt sein, dass es die Änderungen der Federkräfte über den Federweg und die Änderung der Richtung der Federkräfte durch das Verschwenken der Hauptfederung kompensiert.

Der einer Hauptdruckfeder zugeordnete Hebel kann jeweils so gelagert sein, dass er in einem mittleren Ort des Federweges und/oder einem mittleren Ort eines Verschiebeweges, auf dem das Lasttrageteil relativ zum Befestigungsteil verschoben werden kann, parallel zur Traglastrichtung verläuft. Hierdurch soll erreicht werden, dass die Auslenkung des Lastendes der Hauptdruckfeder senkrecht zur Federachse möglichst gering ausfällt. Die Auslenkung kann zudem mit steigender Hebellänge vermindert werden.

Um eine Kräftesymmetrie mit geringeren Reibungskräften zwischen den sich bewegenden Teilen zu erzielen, können bevorzugt zwei Hebel pro Hauptdruckfeder Vorgesehen sein, die parallel zueinander verlaufend und einander gegenüberliegend seitlich an dem Lastende verschwenkbar gelagert sind.

In einer Ausführungsform der Führung können das erste und/oder das zweite Lastwiderlager einen seitlichen ersten Führungsvorsprung aufweisen, der sich senkrecht zur Federachse und zur Tragekraftrichtung durch einen im Befestigungsteil vorgesehenen, in Richtung der Federachse verlaufenden ersten Führungsschlitz erstreckt und der zu seiner Führung an den Innenseitenflächen des Führungsschlitzes verschieblich anliegt. Hierdurch wird eine direkte Linearführung der Hauptdruckfedern in Richtung der Federachse erzielt.

Der erste Führungsschlitz kann in seiner Längserstreckung begrenzt sein. Diese Begrenzung kann bevorzugt als Anschlag für den ersten Führungsvorsprung zur Begrenzung des Federweges der jeweils zugeordneten Hauptdruckfeder dienen. Hierdurch kann der Federweg auf einen Bereich begrenzt werden, in dem die Änderung der Federkräfte in Abhängigkeit vom Federweg möglichst linear ist. Zur Einstellung des Konstantträgers auf eine zu erwartende Last kann vorgesehen sein, dass die Begrenzung in Schlitzlängsrichtung einstellbar ist. Hierzu können beispielsweise Schraubenelemente vorgesehen sein, die in dem ersten Führungsschlitz verschiebbar und feststellbar sind. Der erste Führungsschlitz kann zweckmäßigerweise auch als Langloch ausgeführt sein, das zugleich einen maximal möglichen Federweg begrenzen kann.

Bevorzugt kann der Konstantträger in einer Weiterbildung eine Einstellvorrichtung zur Einstellung einer Vorspannung der Hauptfederung aufweisen. Hierzu können das befestigungsseitig vorgesehene Befestigungswiderlager und/oder das erste und/oder zweite Lastwiderlager der Hauptdruckfedern in Federachsenrich- tung verschiebbar und feststellbar angeordnet sein. Die Widerlager können jeweils in einer üblichen Ausführungsform zweckmäßigerweise eine Stützscheibe aufweisen, auf die sich die Hauptdruckfeder stirnseitig abstützt. Die Stützscheibe kann über eine Schraubverbindung in Federachsenrichtung verschiebbar einstellbar sein. Zur leichteren Halterung der Hauptdruckfedern in den Widerlagern können die Widerlager jeweils eine Hülse aufweisen, die sich von der Stützscheibe zu den Hauptdruckfedern hin erstreckt und diese endseitig umschließt oder sich endseitig in diese hinein erstreckt. Zweckmäßigerweise sollten die Hauptdruckfedern endseitig an der Hülse seitlich anliegen. Somit wird ein seitliches Abrutschen der Hauptdruckfedern von der Stützscheibe verhindert.

Die Stützscheibe des Befestigungswiderlagers kann eine konzentrische Durchgangsbohrung mit einem Innengewinde aufweisen, durch die ein Bolzen mit einem das Innengewinde kämmenden Au-βengewinde geführt ist, wobei der Bolzen mit seiner den Hauptdruckfedern abgewandten Stirnseite an dem Befestigungsteil drehbar gelagert ist. Durch Drehung des Bolzens kann somit die Stützscheibe verschoben werden. Durch die auf die Stützscheibe lastende Federkraft wird verhindert, dass sich die Stützscheibe mit Drehung des Bolzens mitdreht. Zusätzlich kann eine in Umfangsrichtung der Stützscheibe vorgesehene Verankerung der Feder in dem Widerlager vorgesehen sein.

Um eine einfach zu bewerkstelligende Drehung des Bolzens zu erzielen, kann der Bolzen an seiner der Hauptdruckfeder abgewandten Stirnseite einen, sich konzentrisch in Längsrichtung erstreckenden Zapfen mit geringerem Durchmesser als der Bolzen aufweisen, der sich in Einbaulage durch eine ihm angepasste Lageröffnung in dem Befestigungsteil erstreckt und mit einem über die Lageröffnung überstehenden Angriffsende zum Angriff durch ein Werkzeug versehen ist, während der Bolzen sich stirnseitig am Lageröffnungsrand abstützt. Dieses Angriffsende kann beispielsweise als Schraubenkopf, Handrad oder Handhebel ausgebildet sein. Zur Erfassung der Anzahl der Drehungen des Angriffsendes kann außenseitig eine Skala um die Lageröffnung oder ein Zählwerk vorgesehen sein.

In einer bevorzugten Weiterbildung kann der Bolzen an seiner in Einbaulage zum Lasttrageteil hin weisenden Stirnfläche einen seitlich überstehenden Anschlag gegen die Lageröffnung zur Begrenzung eines Einstellweges aufweisen. Dieser Anschlag kann beispielsweise als ein über den äußeren Umfang des Bolzens überstehenden Sicherungssplint ausgeführt sein. Durch die Verschiebung des Widerlagers in Federachsenrichtung wird die Feder auf ihrem Federweg entsprechend zusammengedrückt oder entlastet, so dass hierüber eine bestimmte Vorlast einstellbar ist, mit der die Hauptdruckfeder auf das Lasttrageteil wirkt. Die Vorlast kann hierzu so eingestellt sein, dass sie einer zu erwartenden Last in einer Ruhelage entspricht. Somit ist, ähnlich wie in EP 0 188 654 A1, eine Voreinstellung und Justierung über eine zusätzliche Justiervorrichtung möglich. Von daher wird die Lehre von EP 0 188 654 A1 hinsichtlich des prinzipiellen Verfahrens zur Voreinstellung und Justierung der Hauptfederung in den Offenbarungsgehalt dieser Anmeldung aufgenommen.

Zur Anzeige der Verschiebung der Stützscheibe kann die Stützscheibe einen seitlichen zweiten Führungsvorsprung aufweisen, der sich zur Anzeige der relativen Lage der Stützscheibe durch einen sich in Richtung der Federachse erstreckenden zweiten Führungsschlitz durch das Befestigungsteil erstreckt. Hierbei kann der zweite Führungsschlitz in einer Gehäuseseitenwand des Befestigungsteiles vorgesehen sein. An der Außenseite der Gehäuseseitenwand kann, angrenzend an das Langloch, eine Skala oder dergleichen zur Ablesung der Lage des seitlichen zweiten Führungsvorsprungs angeordnet sein. Wegen des einfachen, nahezu linearen Zusammenhanges zwischen Federweg und Federkraft kann die Skala auch als Lastskala zur Ablesung einer als Vorlast voreingestellten Federkraft ausgelegt sein. Die Stützscheibe kann zur Verbesserung ihrer Führung auch zwei seitliche, sich einander gegenüber liegende Vorsprünge aufweisen, die sich durch zwei zweite Führungsschlitze erstrecken. Hierüber kann an zwei Seiten eine bestimmte Voreinstellung der Vorlast abgelesen werden. Zweckmäßigerweise kann der zweite Führungsschlitz als Langloch ausgeführt sein, das zugleich eine maximal mögliche Verschiebung der Stützscheibe begrenzen kann.

Zu seiner Führung kann das Kurventeil einen seitlichen dritten Führungsvorsprung aufweist, der sich senkrecht zur Federachse und zur Verschieberichtung durch einen im Befestigungsteil vorgesehenen, in Richtung der Federachse verlaufenden dritten Führungsschlitz erstreckt und an den Innenseitenflächen des dritten Führungsschlitzes verschieblich anliegt. Hierbei kann sich der dritte Führungsvorsprung auch beidseitig des Kurventeiles in zwei parallel zueinander verlaufende dritte Führungsschlitze erstrecken. Die dritten Führungsschlitze können in Gehäuseseitenwänden angeordnet sein. Die dritten Führungsschlitze können ebenfalls als Langloch ausgebildet sein. An der Außenseite der Gehäuseseitenwände können entlang des dritten Führungsschlitzes oder der dritten Führungsschlitze als Wegskalen ausgebildete Skalen zur Anzeige des Verschiebungsweges des bzw. der Führungsvorsprünge vorgesehen sein. Ferner kann gemäß dem Stand der Technik, insbesondere gemäß EP 0 188 654 A1, eine Justiervorrichtung zur Einstellung und zur Nachjustierung einer Vorspannung der Hauptdruckfederung und einer Nulllage des Kurventeiles auf seinem Verschiebeweges vorgesehen sein. Um im normalen Betrieb die Auslenkung des dritten Führungsvorsprunges aus der Nulllage einfach und rasch ablesen zu können, können zusätzlich zur Wegskala oder anstatt der Wegskala Markierungen vorgesehen sein, die z.B. die Nulllage und eine zulässige Auslenkung aus der Nulllage heraus markieren. Hierzu können beispielsweise Symbole und/oder Farbmarkierungen verwendet werden.

Wie oben erwähnt, kann der Konstantträger als Konstanthänger oder als Konstantstütze eingesetzt werden. Wird der Konstantträger als Konstanthänger eingesetzt, so befindet sich in Einbaulage des Konstantträgers das Befestigungsteil mit einer Befestigungsvorrichtung oben und das Lasttrageteil zum Anhängen der Last unten. Das Lasttrageteil wirkt somit über eine konstante Zugtragekraft auf eine angehängte Last. Die Befestigungsvorrichtung kann zweckmäßigerweise Laschen und Ösen zur Aufhängung an eine Basis aufweisen, an der der als Konstanthänger ausgelegte Konstantträger bevorzugt verschwenkbar angeordnet sein kann. Somit kann der Konstantträger über eine Schwenkbewegung dem Verschiebungsweg der sich verschiebenden Lasten folgen, so dass die Tragekraftrichtung bezüglich des Konstantträgers im Wesentlichen konstant bleibt. Wird der Konstantträger zum Beispiel als bodengelagerte Konstantstütze eingesetzt, so ist das Befestigungsteil in Einbaulage unten mit dem Boden als Basis verbunden, während das Lasttrageteil oben zum Anschluss an eine Last angeordnet ist, so dass das Federsystem mit einer konstanten Drucktragekraft auf eine aufgelegte Last einwirkt. Das Funktionsprinzip mit dem Federsystem erlaubt aber auch, dass der Konstantträger in beliebiger Lage im Raum als Konstanthänger oder als Konstantstütze eingesetzt wird.

Der Konstantträger kann, wie aus folgenden Abbildungen auch unmittelbar ersichtlich, symmetrisch aufgebaut sein.

Um zum Beispiel sehr große Lasten aufzunehmen, kann der Konstantträger eine, zwei symmetrisch zueinander angeordnete oder jede Hauptdruckfeder zu zwei oder mehr Hauptdruckfedern erweitert sein. Diese können vorzugsweise parallel und weiter vorzugsweise hinsichtlich des Verschiebeweges übereinander oder nebeneinander angeordnet sein. Die Hauptdruckfedern können auch koaxial zueinander angeordnet sein, wobei zweckmäßigerweise eine koaxial innen angeordnete Hauptdruckfeder einen Außendurchmesser aufweist, der kleine als ein Innendurchmesser einer außen angeordneten Hauptdruckfeder ist. In gleicher Weise kann die vorgesehene Zusatzfederung koaxial zueinander angeordnete Zusatzdruckfedern aufweisen.

Die Erfindung wird anhand eines Ausführungsbeispiels mit einer zugehörigen Zeichnung näher erläutert. In der Zeichnung zeigen die Figuren 1 bis 4 nicht die Erfindung:
- Fig. 1: eine perspektivische Darstellung eines Konstantträgers ohne vordere Gehäuseseitenwand, vorderen rechten Hebel und Anschlusslasche,
- Fig. 2a: eine Seitenansicht des Konstantträgers gemäß Fig. 1 in einer oberen Verschiebeposition,
- Fig. 2b: eine Seitenansicht des Konstantträgers gemäß Fig. 2a, jedoch in einer mittleren Verschiebeposition,
- Fig. 2c: eine Seitenansicht des Konstantträgers gemäß Fig. 2b, jedoch in einer unteren Verschiebeposition,
- Fig. 3: einen Ausschnitt gemäß Fig. 2a, jedoch mit Teilschnitten,
- Fig. 4: einen Ausschnitt gemäß Fig. 2a, jedoch mit zusätzlicher vorderer Gehäuseseitenwand.
- Fig. 5a: eine perspektivische Darstellung des erfindungsgemäßen Konstantträgers mit einem Lasttrageteil in oberer Verschiebeposition sowie ohne vordere Gehäuseseitenwand und Anschlusslasche,
- Fig. 5b: eine perspektivische Darstellung des Konstantträgers gemäß Fig. 5a, jedoch in unterer Verschiebeposition,
- Fig. 6a: eine Seitenansicht des Konstantträgers gemäß Fig. 5a
- Fig. 6b: eine Seitenansicht des Konstantträgers gemäß Fig. 6a, jedoch in einer mittleren Verschiebeposition,
- Fig. 6c: eine Seitenansicht des Konstantträgers gemäß Fig. 5b,
- Fig. 7a: eine perspektivische Seitenansicht des Konstantträgers mit vorderer Gehäuseseitenwand und eingesetzter Transportsicherung und
- Fig. 7b: eine perspektivische Seitenansicht des Konstantträgers gemäß Figur 8a ohne eingesetzte Transportsicherung,
- Fig. 8: eine Teilseitenansicht des Konstantträgers gemäß Figur 6a ohne vordere Gehäuseseitenwand.

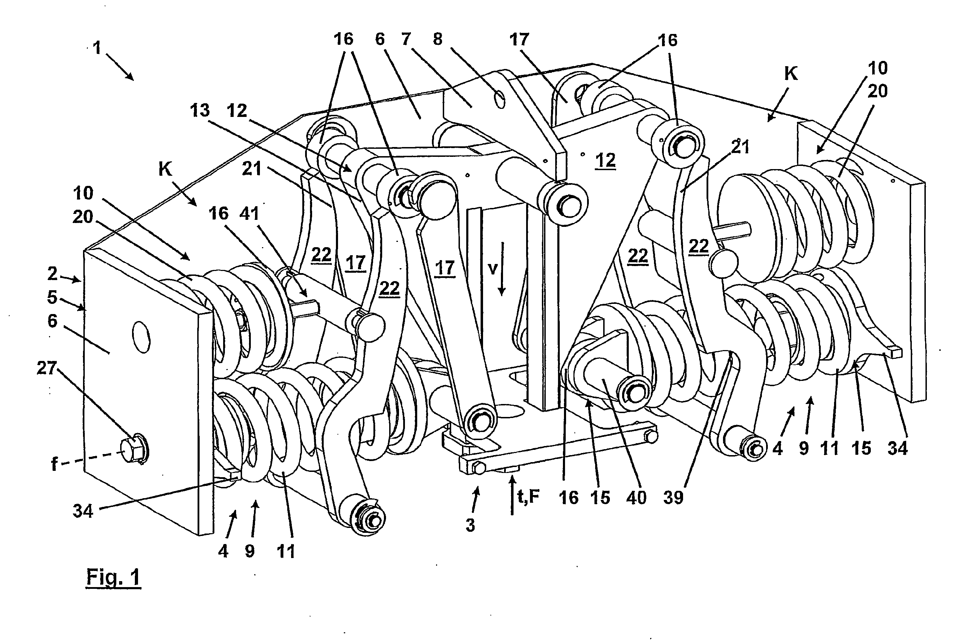

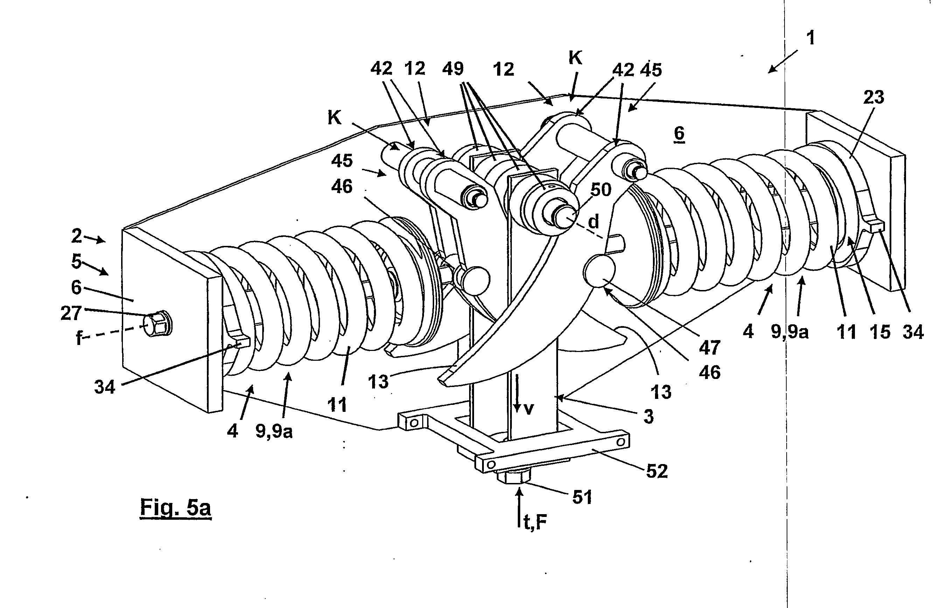

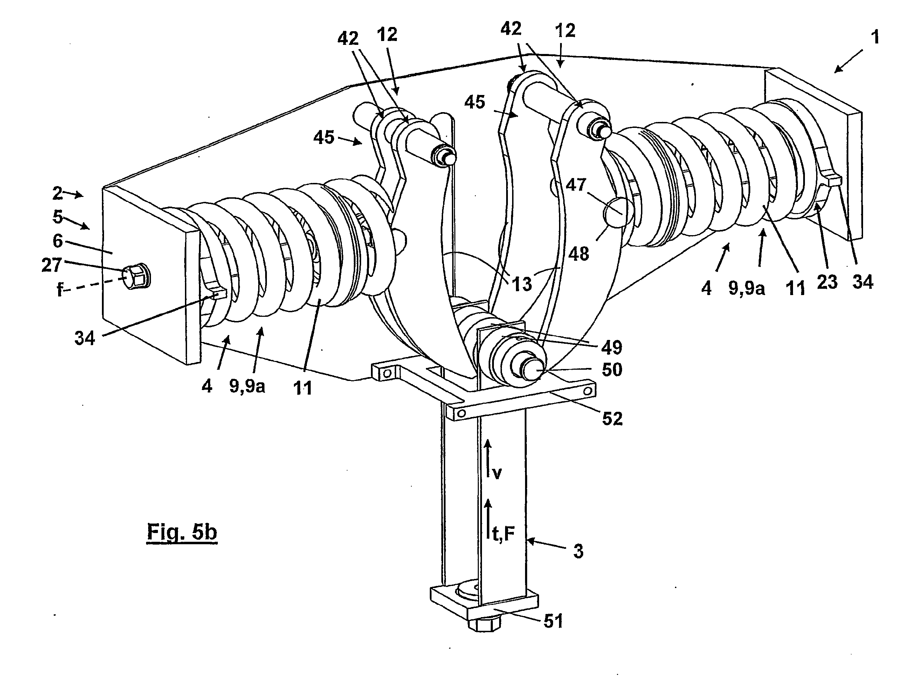

Die Figuren 1 bis 4 zeigen nicht die Erfindung und in den Figuren 5 bis 8 wird der hier als Konstanthänger ausgeführte erfindungsgemäße Konstantträger 1 für hier nicht dargestellte, sich verschiebende Lasten, insbesondere für hier nicht dargestellte Rohrleitungen und dergleichen, mit einem Befestigungsteil 2, einem Lasttrageteil 3 und einem zwischen Befestigungsteil 2 und Lasttrageteil 3 angeordneten Federsystem 4 zur Erzeugung einer konstant bleibenden Tragekraft F in verschiedenen Ansichten dargestellt. Das Federsystem weist eine Kompensationsvorrichtung K zur Kompensation von sich ändernden Druckkräften der Hauptfederung 9 auf.

Beide Konstantträger 1 sind hier als Konstanthänger mit dem in Einbaulage oberen Befestigungsteil 2 und dem sich nach unten erstreckenden Lasttrageteil 3 zum Anhängen der hier nicht dargestellten Last ausgelegt. Das Befestigungsteil 2 weist ein Gehäuse 5 mit Seitenwänden 6 auf, von denen die jeweils vordere Seitenwand zur klareren zeichnerischen Darstellung in den Figuren 1 bis 3 und 5 bis 6 fortgelassen ist. Beide größeren Seitenwände 6 sind mit einer oberen Anschlusslasche 7 verbunden, die eine Befestigungsöffnung 8 zur Verbindung und Aufhängung an eine hier nicht dargestellte Basis aufweist. Das Gehäuse 5 umschließt seitlich und nach oben das Federsystem 4 und das Lasttrageteil 3, wobei das Lasttrageteil 3 in einer Verschieberichtung v nach unten aus dem Gehäuse 5 über einen Verschiebungsweg w heraus verschiebbar und wieder hineinverschiebbar ist.

Im Folgenden wird zunächst der nicht erfindungsgemäße, hieran anschließend der erfindungsgemäße Konstantträger 1 detaillierter beschrieben.

Das Federsystem 4 umfasst in der ersten Ausführungsform des Konstantträgers 1 eine die Last aufnehmende Hauptfederung 9 und, als Teil der Kompensationsvorrichtung K, eine Zusatzfederung 10 zur Kompensation von sich ändernden Druckkräften der Hauptfederung 9. Beide Federungen 9, 10 sind parallel zueinander und senkrecht zur Verschieberichtung v, das heißt in der hier gezeigten Ausführungsform des Konstantträgers 1, in Einbaulage in horizontale Richtung angeordnet. Hierdurch wird eine kompakte Bauform des Konstantträgers 1 ermöglicht. Hauptfederung 9 und Zusatzfederung 10 wirken lastseitig auf das Lasttrageteil 3 und stützen sich befestigungsseitig an dem Gehäuse 5 ab. Die Hauptfederung 9 weist eine Hauptdruckfederung 9a mit zwei symmetrisch zueinander angeordneten Hauptdruckfedern 11 auf, die einander gegenüberliegend mit ihrer Lastseite an einem Kurventeil 12 des Befestigungsteiles 2 anliegen, wobei das Kurventeil 12 zwischen den Hauptdruckfedern 11 angeordnet ist und für jede Hauptdruckfeder 11 eine zugeordnete Kurvenseitenfläche 13 aufweist.

Das Kurventeil 12 ist als plattenförmiges Bauteil mit einer im Wesentlichen dreieckigen Grundform ausgeführt, wobei die Kurvenseitenflächen 13 durch zwei schmale Seitenflächen des plattenförmigen Bauteiles gebildet werden.

Die Kurvenseitenflächen 13 verlaufen somit in eine in etwa konisch verlaufende Beabstandung zueinander, die sich nach oben hin vergrößert. Die Hauptdruckfedern 11 sind hier jeweils in Widerlagern 14, 15, einem lastseitigen ersten Lastwiderlager 14 und einem befestigungsseitigen Befestigungswiderlager 15 geführt. In dem ersten Lastwiderlager 14 ist eine zylindrische Rolle 16 senkrecht zur Verschieberichtung v und zur Federachse f drehbar gelagert, über die sich die jeweilige Hauptdruckfeder 11 an der ihr zugeordneten Kurvenseitenfläche 13 abrollbar abstützt. Auf der gleichen Achse der Rolle 16 und beidseitig der Rolle 16 ist jeweils ein Hebel 17 zur Führung des lastseitigen Endes der jeweiligen Hauptdruckfeder 11 an dem ersten Lastwiderlager 14 verschwenkbar gelagert. Der Hebel 17 ist mit seinem anderen Ende in einem in Tragekraftrichtung t entfernten Schwenkpunkt an der Innenseite des Gehäuses 5 schwenkbar gelagert, wobei das Gehäuse 5 einen innenseitig angebrachten, sich senkrecht zur Federachse f und zur Verschiebungsrichtung v erstreckenden Bolzen 18 aufweist, an den der Hebel 17 über eine endseitig vorgesehene maulförmige Öffnung 19 seitlich schiebbar ist. Die Öffnung 19 weist mit einer Wegkomponente zu dem anderen Ende des Hebels 17 hin, so dass der konstruktionsbedingt im Betrieb auf Zug belastete Hebel sicher in der Öffnung 19 gelagert ist. Die Maulform der Öffnung 19 ist gewählt, um bei der Montage des Konstantträgers 1 den Hebel 17 leicht mit dem Gehäuse 5 verschwenkbar zu verbinden.

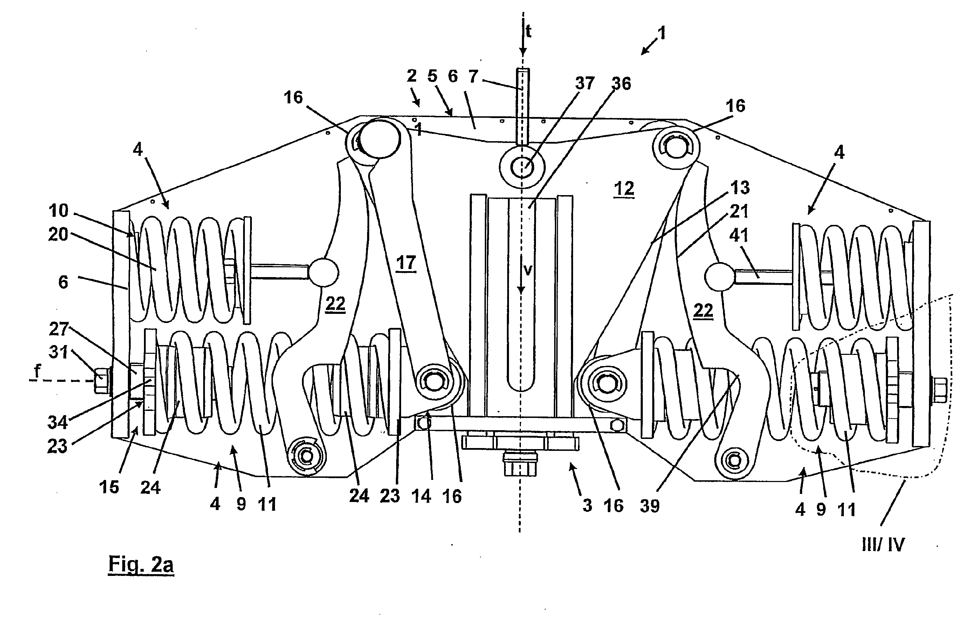

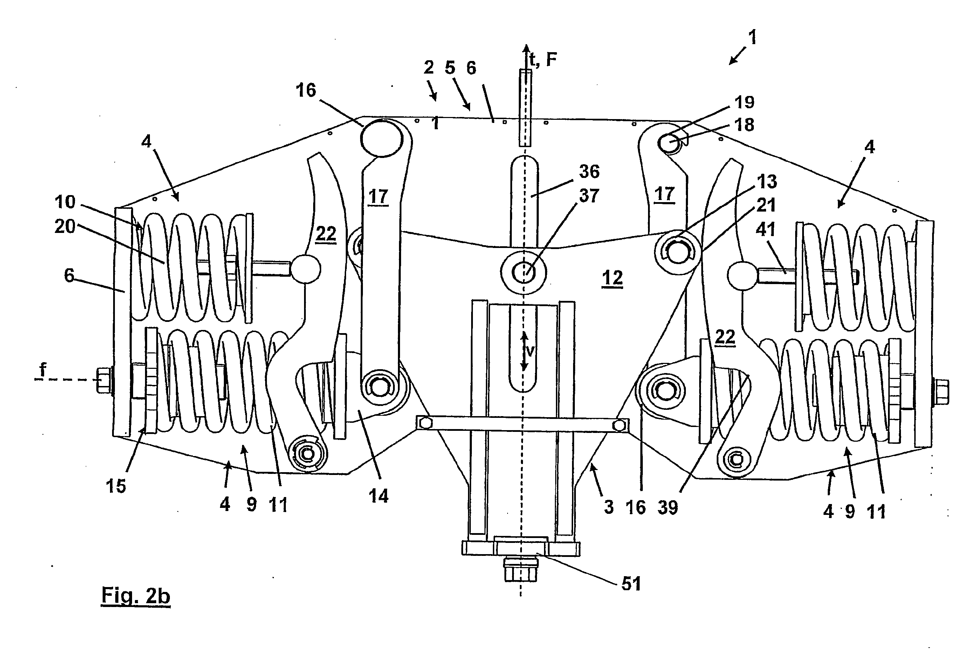

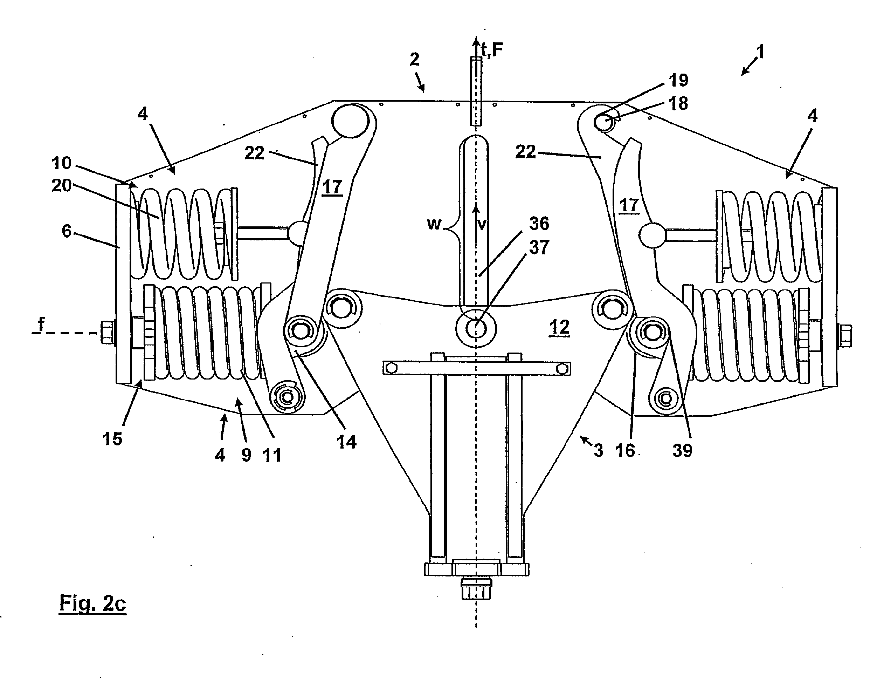

In den Figuren 2a bis c ist die Verschiebung des Lasttrageteiles 3 in drei Positionen dargestellt: In Fig. 2a in einer oberen Verschiebeposition, in Fig. 2b in einer mittleren Verschiebeposition und in Fig. 2c in einer unteren Verschiebeposition. Durch das Verschieben des Lasttrageteiles 3 aus dem Gehäuse 5 von der oberen Verschiebeposition in die untere Verschiebeposition reagiert der Konstantträger 1 auf eine Verschiebung der hier nicht dargestellten und an das Lasttrageteil 3 angeschlossenen Lasten von dem Konstantträger 1 weg. Hierbei werden die Hauptdruckfedern 11 über ein Abrollen der Rollen 16 an den Kurvenseitenflächen 13 des Kurventeiles 12 zusammengedrückt und üben somit über das Kurventeil 12 eine entsprechend wachsende Federkraft auf das Lasttrageteil 3 und damit auf die sich verschiebende Last auf. Da die Hauptdruckfedern 11 jeweils lastseitig über die zugeordneten Hebel 17 geführt werden, werden die Hauptdruckfedern 11 mit ihrem Lastende auf einem entsprechenden Schwenkbogen geführt, wobei der Hebel 17 in der in Fig. 2b dargestellten mittleren Verschiebeposition senkrecht zur Verschieberichtung verläuft. Die hierdurch sich ergebenden Abweichungen von einer linearen Übersetzung der Federkraft in Richtung der Verschieberichtung v wird durch einen entsprechend angepassten Verlauf der Kurvenseitenflächen 13 korrigiert, die wegen ihrer Geringfügigkeit in der Zeichnung nicht exakt darstellbar sind.

Die Zusatzfederung 10 weist Zusatzdruckfederungen 20 auf, die parallel zu den Hauptdruckfedern 11 verlaufen und die über Zusatzkurventeile 21 auf das Kurventeil 12 bzw. auf das Lasttrageteil 3 wirken, wobei die Zusatzkurventeile 21 an selbstständigen Schwenkhebeln 22 angeordnet sind. Hierbei sind die Schwenkhebel 22 einer Zusatzdruckfederung 20 parallel zueinander beabstandet seitlich der Hauptdruckfeder 11 und der Zusatzdruckfederung 20 angeordnet, sind am unteren Ende schwenkbar an dem Gehäuse 5 gelagert und stützen sich etwa mittig an dem ersten Lastwiderlager 14 der Zusatzfederung 20 ab.

In der oberen Verschiebeposition greifen die Schwenkhebel 22 mit einem oberen Ende einer Zusatzkurvenseitenfläche des Zusatzkurventeiles an dem oberen Teil des Kurventeiles 12 an. Das Kurventeil 12 weist an dieser Stelle jeweils eine Rolle 16 zur Reibungsverminderung bei einer Relativbewegung zwischen Kurventeil 12 und Schwenkhebel 22 auf, wobei die Rollen 16 senkrecht zur Verschieberichtung v und zur Federachse f an dem Kurventeil 12 drehbar gelagert sind. Mit dem Verschieben des Kurventeiles 12 bzw. des Lasttrageteiles 3 von der oberen Verschiebeposition (Fig. 2a) in die untere Verschiebeposition (Fig. 2c) übt die Zusatzfederung 20 über die Zusatzkurventeile 21 unterschiedliche Kräfte auf das Kurventeil 12 aus.

In der oberen Verschiebeposition wirkt die Zusatzfederung 10 mit einer nach oben weisenden Kraftkomponente in Verschieberichtung v als Zugkraft und verstärkt somit die auf die Last wirkende, relativ geringe Zugkraft der Hauptdruckfeder 11. In der mittleren Verschiebeposition wirkt die Zusatzfederung senkrecht zur Verschieberichtung und nicht in Verschieberichtung v, wobei sich die Kräfte in der Zusatzfederung aufheben. Hierbei wirkt die Hauptdruckfeder 11 mit der zuvor eingestellten Vorlast auf das Kurventeil 12. Dies wird auch als Nulllage bezeichnet. In der unteren Verschiebeposition wirkt die Zusatzfederung 10 mit einer Kraftkomponente als Druckkraft in Verschieberichtung v und damit der im zusammengedrückten Zustand der Hauptdruckfedern relativ hohen Zugkraft entgegen. Der Verlauf der Resultierenden in Verschieberichtung v aus der Summe aller durch das Federsystem 4 auf das Lasttrageteil 3 ausgeübten Kräfte entspricht bei exakter Einstellung und Ausbildung der Kurventeile 12, 21 exakt der idealen linearen Kennlinie der Hauptdruckfedern 11. Dadurch wird die Kraft der Hauptdruckfedern 11 mit federbedingter technischer Abweichung zu einer konstanten Stützlast ausgeglichen.

Zur exakten Führung sowie zur Einstellung und Anzeige der Hauptdruckfedern 11 sind weitere Vorkehrungen getroffen. Hierzu weisen die Widerlager 13, 14 eine Stützscheibe 23 mit einer Hülse 24 auf, die sich in den Innenraum der Hauptdruckfedern 11 hinein erstrecken, wobei die Hauptdruckfedern endseitig an den Hülsen 24 anliegen.

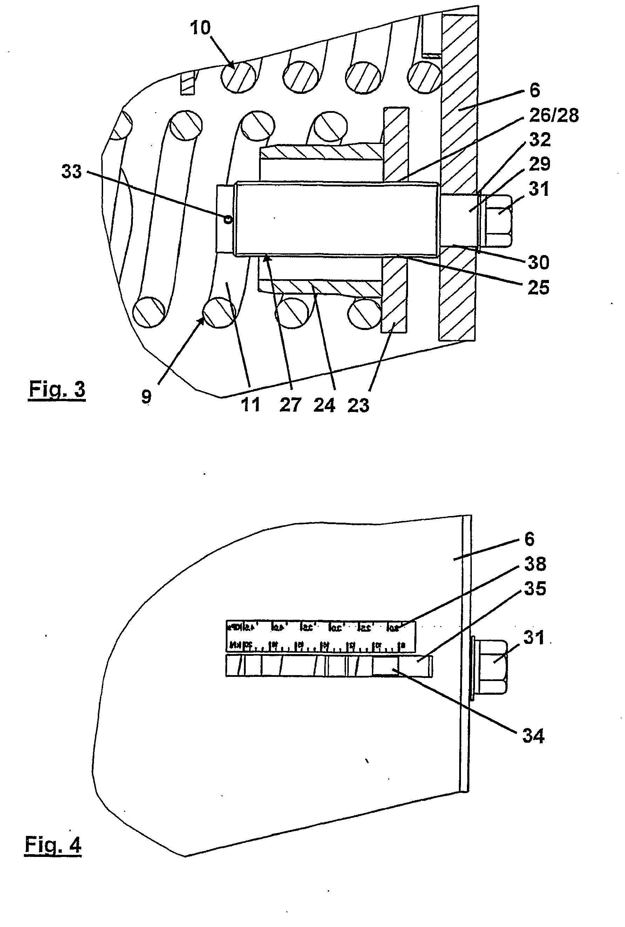

Zur Einstellung einer Vorspannung der Hauptdruckfedern 11 ist das Befestigungswiderlager 15 der Hauptdruckfedern 11 axial verschiebbar. Dies wird in den Figuren 3 und 4, 2 anhand eines Ausschnittes III/IV gemäß Fig. 2a, näher dargestellt. In Figur 3 weist der Ausschnitt zusätzliche partielle Schnittbereiche auf, während in Figur 4 zusätzlich die in Figur 2a fortgelassene, vorderer Gehäuseseitenwand 6 gezeigt wird. Die Stützscheibe 23 des Befestigungswiderlagers 15 ist mit einer konzentrischen Durchgangsbohrung 25 mit einem Innengewinde 26 versehen, durch die ein Bolzen 27 mit einem das Innengewinde 26 auskämmenden Außengewinde 28 geführt ist, wobei der Bolzen 27 an seiner der Hauptdruckfeder 11 abgewandten Stirnseite an der Seitenwand 6 des Gehäuses 5 drehbar gelagert ist. Der Bolzen 27 weist hierzu an dieser Stirnseite einen sich konzentrisch in Längsrichtung erstreckenden Zapfen 29 mit geringerem Durchmesser als der Bolzen 27 auf, wobei sich der Zapfen 29 durch eine ihm angepasste Lageröffnung 30 in der Seitenwand 6 erstreckt und mit einem Angriffsende 31 für den Angriff durch ein hier nicht dargestelltes Werkzeug außen über der Lageröffnung übersteht. Bolzen 27, Zapfen 29 und Angriffsende 31 sind einstückig ausgeführt und über einen Sicherheitsring 32 gegen ein Herausfallen aus der Lageröffnung 30 im unbelasteten Zustand gesichert. Mit Drehung des Angriffsendes 31 bzw. des Bolzens 27 wird das Befestigungswiderlager 15 über den Gewindeeingriff von Stützscheibe 23 und Bolzen 27 in Richtung der Federachse f geschoben und somit die zugehörige Hauptdruckfeder 11 mit einer gewünschten Vorspannung versehen. Dadurch kann das Federsystem 4 auf eine bestimmte Last eingestellt werden, wie es vom Prinzip her auch in EP 0 188 654 A1 beschrieben wird. Zur Begrenzung auf der einen Seite kann die Stützscheibe 23 gegen die Seitenwand 6 anschlagen, während auf der anderen Seite, am freien Ende des Bolzens 27, eine Anschlagsöffnung 33 vorgesehen ist, durch die ein hier nicht dargestellter Sicherungssplint eingesetzt werden kann, der zugleich als Anschlag dienen kann.

Die Stützscheibe 23 des Befestigungswiderlagers 15 der Hauptdruckfedern 11 ist mit einem seitlichen zweiten Führungsvorsprung 34 versehen, der sich senkrecht zur Federachse f und zur Verschieberichtung v durch einen in der Seitenwand 6 vorgesehenen, in Richtung der Federachse f verlaufenden zweiten Führungsschlitz 35 erstreckt und zu seiner Führung an den Innenseitenflächen des zweiten Führungsschlitzes 35 verschieblich anliegt, wie insbesondere den Figuren 1 und 4 entnehmbar ist. Außenseitig an der Seitenwand 6 ist eine in Figur 4 gezeigte Lastskala 38 angebracht, an der die Einstellung der Vorlast der Hauptdruckfeder 11 über die Verschiebung des zweiten Führungsvorsprunges 34 in dem zweiten Führungsschlitz 35 direkt ablesbar ist. Daher ist, wie hier nicht explizit gezeigt, die Skalierung der Lastskala 38 in der Krafteinheit Newton abgefasst. Somit kann die eingestellte Vorlast direkt abgelesen werden. Durch die Führung des zweiten Führungsvorsprunges 34 in den zweiten Führungsschlitz 35 wird zudem verhindert, dass sich das Befestigungswiderlager 15 insbesondere bei geringem Zusammendrücken der Hauptdruckfeder 11 beim Einstellen der Vorspannungen durch Drehung des Bolzens 27 mit dem Bolzen 27 mitdreht.

In ähnlicher Weise ist eine Führung des Kurventeiles 12 in Verschieberichtung v vorgesehen, wobei an den einander gegenüberliegenden großen Seitenwänden 6 des Gehäuses 5 jeweils ein dritter Führungsschlitz 36 vorgesehen ist, in dem jeweils ein dritter Führungsvorsprung 37 verschiebbar geführt ist. Der dritte Führungsschlitz 36 ist als Langloch ausgebildet, dessen Ende zugleich als Anschlag zur Begrenzung des Verschiebungsweges des Befestigungsteiles 2 dienen. Der dritte Führungsvorsprung 37 erstreckt sich zudem über den dritten Führungsschlitz 36 hinaus und dient als Kennmarke zur Justierung der Vorspannung der Hauptdruckfedern 11 in Bezug auf eine bestimmte Last, wie es in EP 0 188 654 A1 näher beschrieben ist und das jedoch zur klareren Darstellung der dahinter liegenden Teile des Federsystemes 4 hier nicht gezeigt ist.

Der Schwenkhebel 22 ist in seinem Abschnitt zwischen seiner Lagerung an einer größeren Seitenwand 6 des Gehäuses 5 und dem Beginn des Zusatzkurventeiles 21, über das der Schwenkhebel 22 an dem Kurventeil 12 angreift, mit einem Formsprung 39 versehen. Mittels dieses Formsprunges 39 übergreift der Schwenkhebel 22 in der unteren Verschiebeposition (Figur 2c) einen Bolzen 40 des ersten Lastwiderlagers 14, über den der Hebel 17 verschwenkbar auf das erste Lastwiderlager 14 einwirkt und der zur seitlichen Beabstandung des Hebels von der Hauptdruckfeder 11 dient. Dadurch wird die kompakte Bauweise des Konstantträgers 1 weiter gesteigert. In der unteren Position greifen somit der zur Zusatzfederung 10 zugehörige Formsprung 39 und das die Hauptdruckfeder 11 aufnehmende erste Lastwiderlager 14 ineinander und verhindern über die auf gewünschte minimale Federlänge zusammengedrückte Hauptdruckfeder 11 eine weitergehende Abwärtsbewegung des Lasttrageteiles 3 über die untere Verschiebeposition hinaus.

Gemäß dem genannten Stand der Technik EP 0 188 654 A1 ist ebenfalls die Zusatzdruckfederung 20 einstellbar. Hierzu wird das zugehörige Befestigungswiderlager 15 über eine Schraubverstellung 41 eingestellt.

Im Folgenden wird auf den erfindungsgemäßen Konstantträger 1 eingegangen, wie in den Figuren 5a bis 8b in verschiedenen Ansichten und einem Ausschnitt gezeigt.

Gleich dem nicht erfindungsgemäßen Konstantträger 1 weist der erfindungsgemäße Konstantträger 1 eine horizontale Hauptfederung 9 mit einer eine etwa senkrecht zur Tragekraft F angeordnete Hauptdruckfederung 9a auf, wobei die Hauptdruckfederung 9a zwei Hauptdruckfedern 11 umfasst, zwischen denen das Kurventeil 12 angeordnet ist. Im Unterschied zu dem nicht erfindungsgemäßen Konstantträger weist der erfindungsgemäße Konstantträger 1 als Kompensationsvorrichtung K keine Zusatzfederung auf. Stattdessen ist das Kurventeil 12 als Teil der Kompensationsvorrichtung K ausgebildet. Das Kurventeil 12 ist zur Kraftübertragung von der Hauptfederung 9 auf das Lasttrageteil 3 mit der Hauptfederung 9 und dem Lasttrageteil 3 gekoppelt. Durch die besondere Ausbildung des Kurventeiles sind mit Verschieben des Lasttrageteiles 3 über den Verschiebeweg w Lasttrageteil 3 und Kurventeil 12 erfindungsgemäß so auf einem nichtlinearen Weg relativ zueinander bewegbar, dass eine vollständige Kompensation der sich ändernden Federkräfte der Hauptfederung 9 auf das Lasttrageteil 3 erzielbar ist.

Hierzu weist das Kurventeil 12 in dieser Ausführungsform vier als Kurvenhebel 42 ausgebildete Hebel auf, die jeweils in einer Schwenkebene mit der Verschieberichtung v und der Federachse f verschwenkbar an dem Befestigungsteil 2 gelagert sind. Die Kurvenhebel 42 sind als flache Bauteile mit zwei schmalen, einander gegenüberliegenden Seitenflächen, einer ersten Seitenfläche 43 und einer zweiten Seitenfläche 44, ausgeführt, wobei die zweite Seitenfläche 44 jeweils als Kurvenseitenfläche 13 ausgebildet ist. Jeweils zwei der Kurvenhebel 42 sind als Kurvenhebelpaar 45 zusammengefasst und einer der Hauptdruckfedern 11 zugeordnet. Die Hauptdruckfedern 11 sind über ein zweites Lastwiderlager 46 mit einem Querbolzen 47 verschwenkbar an dem ihnen jeweils zugeordneten Kurvenhebelpaar 45 gelagert, wobei der Querbolzen 47 drehbar und axial gesichert in eine im Mittenbereich der ersten Seitenfläche 43 eingebrachte Nut 48 eingreift. Das Lasttrageteil 3 liegt über Lastrollen 49 an Kurvenseitenflächen 13 abrollbar an, wobei jedem Kurvenhebel 42 eine Lastrolle 49 zugeordnet ist und alle Lastrollen 49 auf einer gemeinsamen Lastrollenachse 50 mit einer Drehachse d drehbar gelagert sind. Die Hauptdruckfedern 11 drücken mit ihren Federkräften über das zweite Lastwiderlager 46 gegen die ersten Seitenflächen 43 der Kurvenhebel 42, die die Federkräfte über die ihnen zugeordnet Lastrolle 49 auf das Lasttrageteil 3 weitergeben.

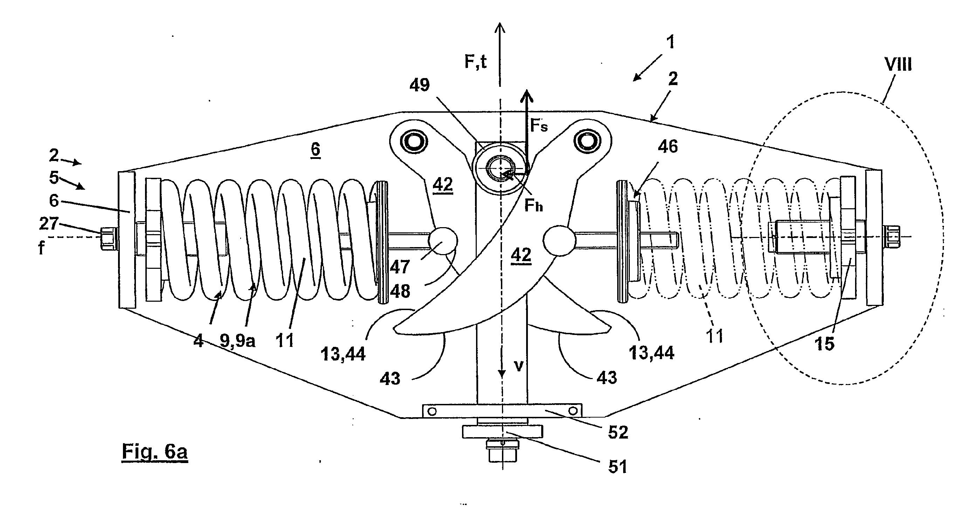

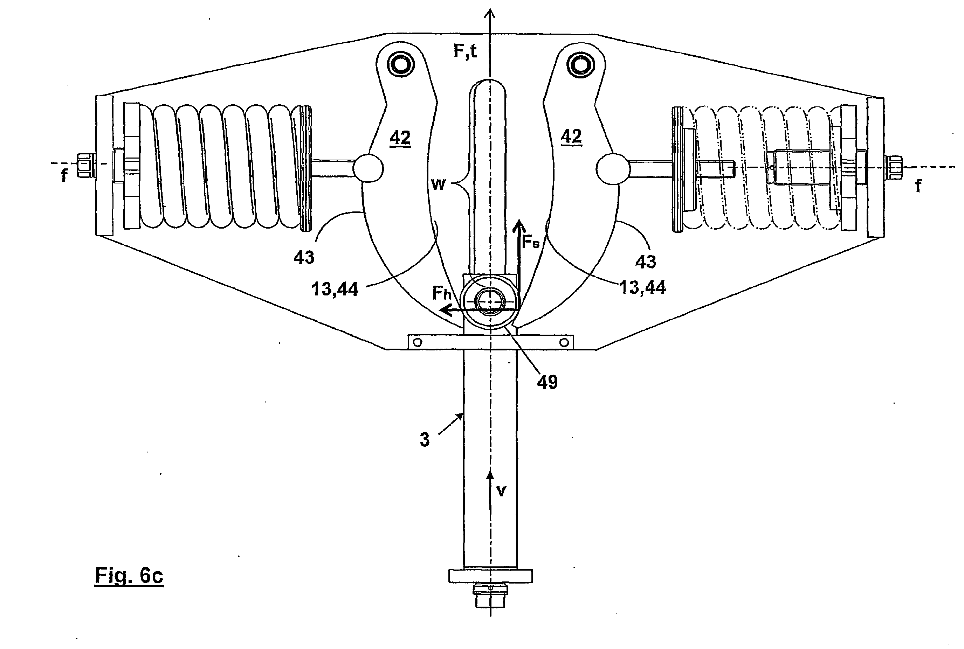

In der Figur 5a ist das Lasttrageteil 3 in einer oberen Verschiebeposition gezeigt, in der, wie in der ersten Ausführungsform, das Lasttrageteil 3 maximal in das Gehäuse 5 eingezogen ist. In der Figur 5b ist das Lasttrageteil 3 in einer unteren Verschiebeposition gezeigt, in der, wie in der ersten Ausführungsform, das Lasttrageteil 3 maximal aus dem Gehäuse 5 herausgezogen ist. Ähnlich zeigen die Figuren 6a und 6c den Konstantträger 1 mit dem Lasttrageteil 3 in einer oberen bzw. in einer unteren Verschiebeposition, jedoch hier jeweils in einer Seitenansicht. In Figur 6c ist zudem ein maximaler Verschiebeweg w des Lasttrageteiles 3 eingezeichnet, über den dasselbe aus dem Gehäuse 5 heraus verfahrbar ist.

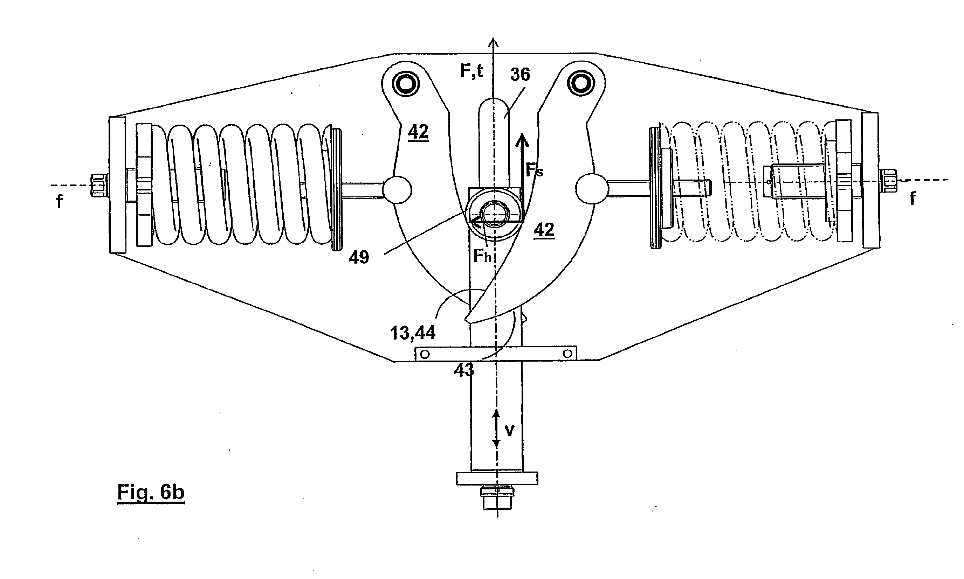

Die Figur 6b gibt das Lasttrageteil 3 in einer mittleren Verschiebeposition wieder. Durch die Anlenkung der Kurvenhebel 42 an das Gehäuse 5 werden die Hauptdruckfedern 11, die, wie bei der ersten Ausführungsform des Konstantträgers 1, jeweils über ein Befestigungswiderlager 15 an dem Gehäuse 5 angelagert sind, mit ihrer Lastseite an dem zweiten Lastwiderlager 44 und mit dem Befestigungswiderlager 15 als Schwenkpunkt leicht verschwenkt. Die Geometrien des Konstantträgers 1 sind hierbei so eingestellt, dass die Hauptdruckfedern 11 der mittlere Verschiebeposition senkrecht zur Verschieberichtung v verlaufen. Das Lasttrageteil 3 ist zum Anhängen einer hier nicht dargestellten Last mit einem als Lasttrageende 51 ausgebildeten Ende durch eine Führungsblende 52 aus dem Gehäuse 5 geführt.

Über die Kurvenhebel 42 wird in jeder Verschiebeposition des Lasttrageteiles 3 über den Verschiebeweg w eine Tragekraft F mit einer hier senkrechten Kraftkomponente Fₛ in Tragkraftrichtung, und einer hier horizontalen Kraftkomponente Fₕ in Richtung der Federachse f und senkrecht zur Kraftkomponente Fₛ auf die Rollen ausgeübt, wobei sich die horizontalen Kraftkomponenten Fₕ dank des symmetrischen Aufbaues bzw. dank der symmetrischen Anordnung der Hauptdruckfedern 11 aufheben und zusammen mit der hier nicht dargestellten, an dem Lasttrageende 51 des Lasttrageteils 3 angeordneten Last für den Zusammenhalt der einzelnen beweglichen Teile des Konstantträgers 1 sorgen. Die Kurvenseitenflächen 13 sind so profiliert, dass die Kraftkomponente Fₛ von der unteren Verschiebeposition zu der oberen Verschiebeposition hin kontinuierlich und nichtlinear in einem errechneten Maße so zunimmt, dass die sich ändernden Federkräfte der Hauptfederung 9 beim Zusammendrücken bzw. Auseinandergehen derselben und die durch das oben genannte Verschwenken der Hauptdruckfedern 11 mit Verschwenken der Kurvenhebel 42 veränderte Richtung der Federachse f vollständig kompensiert wird und eine über den Verschiebeweg w konstante Tragekraft F auf die Last wirkt. Die Tragekraft F ist qualitativ etwa die Summe aller senkrechten Kraftkomponenten Fₛ an den Lastrollen 49. Es versteht sich, dass die Kraftpfeile, die in den Figuren 6a bis 6c als Auflagerreaktion von einem Kurvenhebel 42 auf eine Lastrolle 49 beispielgebend für die Tragekraft F und die Kraftkomponenten Fₛ und Fₕ eingezeichnet sind, lediglich qualitativ anzusehen sind und nicht genaue Betragsangaben wiedergeben.

Zur Steigerung der kompakten Bauweise greifen, wie insbesondere in den Figuren 5a und 5b ersichtlich, die Kurvenhebelpaare 45 auf dem Weg von der unteren in die obere Verschiebeposition zangenartig ineinander, indem sie, sich jeweils mit ihrer Kurvenseitenfläche 13 an eine der auf der gemeinsamen Lastrollenachse 50 drehbar gelagerten Lastrolle 49 abstützend, an diesen abrollen. Das äußere Profil der Kurvenhebel 43 ist bis auf den Bereich, in dem die Kurvenhebel 43 am Gehäuse 5 angelenkt sind, etwa sichel- oder bananenförmig ausgebildet, womit, unter dem Aspekt einer Materialminimierung, dem zu erwartenden Kraft- und Momentenverlauf in dem Kurvenhebel 43 Rechnung getragen wird.

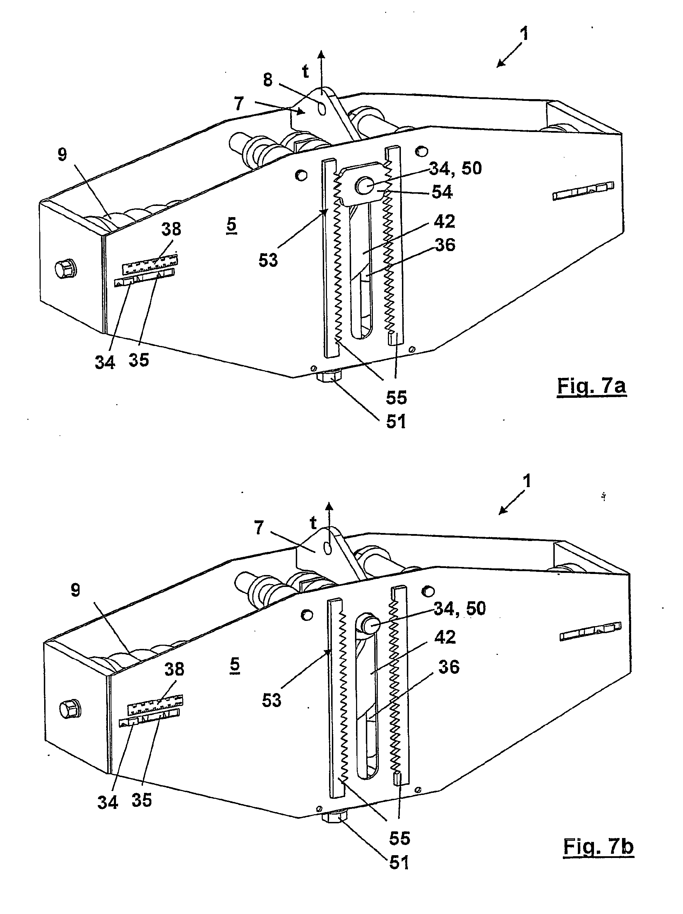

Wie oben erläutert, wird mit Einstellung der Hauptfederung 9 in Arbeitslage des Konstantträgers eine permanente Federkraft des Federsystemes 4 auf die Last ausgeübt. Mit Fehlen der Last, wie zum Beispiel bei Transport oder Lagerung des Konstantträgers, würde das Lasttrageteil 3 mit der zum Tragen der Rohrleitung bestimmten Kraft entgegen der Lasttragekraft beschleunigt. Daher ist für ein unbenutzten Konstantträger eine in den Figuren 7a und 7b dargestellte Transportsicherung 53 mit einer Zahnscheibe 54 bereitgestellt, die auf der sich durch einen dritten Führungsschlitz 37 erstreckende Lastrollenachse 50 aufsetzbar ist und die, zwischen zwei an dem Gehäuse 5 vorgesehene Zahnschienen 55 gesetzt, in dieselben eingreift und somit die Bewegung des Lasttrageteiles 3 auf dem Verschiebe weg blockiert. Mit Anhängung der Last am Lasttrageende 51 kann die Zahnscheibe 54 entfernt werden (Figur 7b).

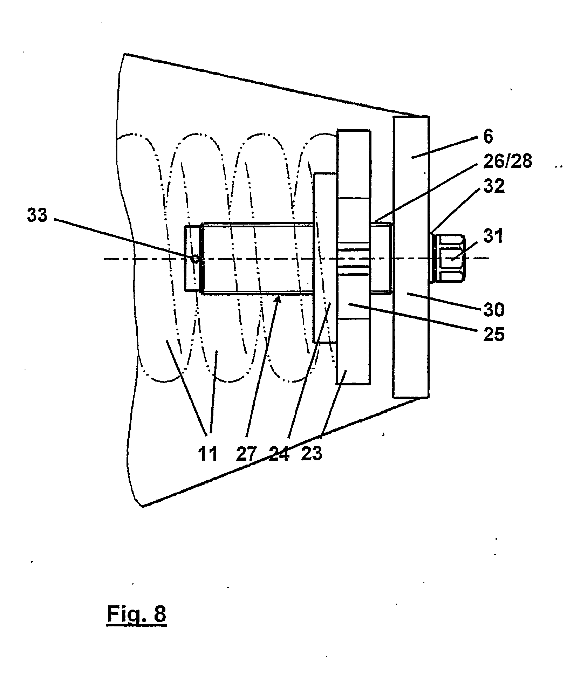

Befestigungswiderlager 15 und zweites Lastwiderlager 46 des erfindungsgemäßen Konstantträgers 1 sind im Prinzip gleich dem Befestigungswiderlager 15 und dem ersten Lastwiderlager 14 des nicht erfindungsgemäßen Konstantträgers einstellbar ausgelegt. Desgleichen ist auch eine Lastskala 38 zur exakteren Einstellung der jeweiligen Hauptdruckfeder 11 vorgesehen. Wegen des symmetrischen Aufbaus ist lediglich eine Lastskala 38 für beide Hauptdruckfedern 9 notwendig. Wie in der Detaildarstellung in Figur 8 ersichtlich, ist eine Abänderung in der Hülse 24 vorgesehen, die hier vorteilhaft kleiner und damit den Zusammenbau erleichternd ausgeführt ist.

### Bezugszeichenliste

- 1: Konstantträger
- 2: Befestigungsteil
- 3: Lasttrageteil
- 4: Federsystem
- 5: Gehäuse
- 6: Seitenwand
- 7: Anschlusslasche
- 8: Befestigungsöffnung
- 9: Hauptfederung
- 9a: Hauptdruckfederung
- 10: Zusatzfederung
- 11: Hauptdruckfeder
- 12: Kurventeil
- 13: Kurvenseitenfläche
- 14: erstes Lastwiderlager
- 15: Befestigungswiderlager
- 16: Rolle
- 17: Hebel
- 18: Bolzen
- 19: Öffnung
- 20: Zusatzdruckfederung
- 21: Zusatzkurventeil
- 22: Schwenkhebel
- 23: Stützscheibe
- 24: Hülse
- 25: Durchgangsbohrung
- 26: Innengewinde
- 27: Bolzen
- 28: Außengewinde
- 29: Zapfen
- 30: Lageröffnung
- 31: Angriffsende
- 32: Sicherungsring
- 33: Anschlagsöffnung
- 34: zweiter Führungsvorsprung
- 35: zweiter Führungsschlitz
- 36: dritter Führungsschlitz
- 37: dritter Führungsvorsprung
- 38: Lastskala
- 39: Formsprung
- 40: Bolzen
- 41: Schraubverstellung
- 42: Kurvenhebel
- 43: erste Seitenfläche
- 44: zweite Seitenfläche
- 45: Kurvenhebelpaar
- 46: zweites Lastwiderlager
- 47: Querbolzen
- 48: Nut
- 49: Lastrolle
- 50: Lastrollenachse
- 51: Lasttrageende
- 52: Führungsblende
- 53: Transportsicherung
- 54: Zahnscheibe
- 55: Zahnschiene
- d: Drehachse
- F: Tragekraft
- Fₛ: senkrechte Kraftkomponente
- Fₕ: horizontale Kraftkomponente
- f: Federachse
- K: Kompensationsvorrichtung
- t: Tragekraftrichtung
- v: Verschieberichtung
- w: Verschiebeweg

## Patentansprüche

1. Konstantträger für sich verschiebende Lasten, insbesondere für Rohrleitungen und dergleichen, mit einem Befestigungsteil (2), einem Lasttrageteil (3) und einem zwischen Befestigungsteil (2) und Lasttrageteil (3) angeordneten Federsystem (4) zur Erzeugung einer konstant bleibenden Tragekraft, wobei das Federsystem (4) eine die Last aufnehmende Hauptfederung (9) und eine Kompensationsvorrichtung (K) zur Kompensation von sich ändernden Federkräften der Hauptfederung (9) auf das Lasttrageteil (3) aufweist, wobei die Kompensationsvorrichtung mindestens ein Kurventeil (12) aufweist, dass das Kurventeil (12) zur Kraftübertragung von der Hauptfederung (9) auf das Lasttrageteil (3) mit der Hauptfederung (9) und dem Lasttrageteil (3) gekoppelt ist und dass mit Verschieben des Lasttrageteiles (3) über den Verschiebeweg (w) das Lasttrageteil (3) und das Kurventeil (12) auf einem nichtlinearen Weg relativ zueinander so bewegbar sind, dass eine vollständige Kompensation der sich ändernden Federkräfte der Hauptfederung (9) auf das Lasttrageteil (3) erzielbar ist, **dadurch gekennzeichne**t, **dass** das Kurventeil (12) mindestens einen als Kurvenhebel (42) ausgebildeten und an dem Befestigungsteil (2) verschwenkbar gelagerten Hebel mit zwei einander gegenüberliegenden Seitenflächen in seiner Längserstreckung, einer erste Seitenfläche (43) und eine zweite Seitenfläche (44), aufweist, dass die Hauptfederung (9) mit ihrer Lastseite an der ersten Seitenfläche (43) verschwenkbar angelagert ist oder sich an dieser abstützt und dass die zweite Seitenfläche (44) als Kurvenseitenfläche (13) ausgebildet ist, an der das Lasttrageteil (3) verschieblich oder abrollbar anliegt.

2. Konstantträger nach Anspruch 1, **dadurch gekennzeichnet, dass** die Hauptfederung (9) eine etwa senkrecht zur Tragekraft angeordnete Hauptdruckfederung (9a) aufweist.

3. Konstantträger nach Anspruch 1 oder 2, **dadurch gekennzeichnet, dass** das Lasttrageteil (3) eine Lastrolle (49) mit einer Drehachse(d) senkrecht zur Federachse (f) und senkrecht zur Tragekraftrichtung (t) aufweist und dass die Kurvenseitefläche (13) in einer Ebene senkrecht zur Drehachse (d) an der Lastrolle (49) anliegt.

4. Konstantträger nach einem der Ansprüche 1 bis 3, **dadurch gekennzeichnet, dass** die Kurvenseitenfläche (13) an dem Lasttrageteil (3) mit einem sich über den Verschiebeweg (w) ändernden Bereich anliegt, der sich mit einem sich über den Verschiebeweg ändernden Betrag von einem Ende des Lasttrageteiles (3) zum Anordnen der Last abgewandt ist.

5. Konstantträger nach einem der Ansprüche 1 bis 4, **dadurch gekennzeichnet, dass** die Hauptdruckfederung (9a) zwei Hauptdruckfedern (11) aufweist, die mit ihrer Lastseite symmetrisch auf das Lasttrageteil (3) einwirken.

6. Konstantträger nach Anspruch 5, **dadurch gekennzeichnet, dass** die Hauptdruckfedern (11) auf einer gemeinsamen Federachse (f) angeordnet sind und dass sich die Hauptdruckfedern (11) einander gegenüberliegend mit ihrer Lastseite an dem Kurventeil (12) und mit ihrer Befestigungsseite an dem Befestigungsteil (2) abstützen.

7. Konstantträger nach Anspruch 6, **dadurch gekennzeichnet, dass** das Kurventeil (12) zwischen den Hauptdruckfedern (11) angeordnet ist.

8. Konstantträger nach einem der Ansprüche 5 bis 7, **dadurch gekennzeichnet , dass** das Kurventeil (12) für jede Hauptdruckfeder (11) eine zugeordnete Kurvenseitenfläche (13) aufweist.

9. Konstantträger nach einem der Ansprüche 5 bis 8, **dadurch gekennzeichnet, dass** das Kurventeil (12) als plattenförmiges Bauteil mit schmalen Seitenflächen ausgeführt ist, wobei die beiden Kurvenseitenflächen (13) durch zwei gegenüberliegende, spiegelsymmetrisch zueinander angeordnete, schmale Seitenflächen gebildet werden.

10. Konstantträger nach Anspruch 5 bis 9, **dadurch gekennzeichnet, dass** jeder Hauptdruckfeder (11) mindestens ein Kurvenhebel (42) zugeordnet ist, dass sich die Hauptdruckfeder (11) in einem Abstützbereich der ersten Seitefläche (43) des ihnen zugeordneten Kurvenhebels (11) in einem zweiten Lastwiderlager (46) abstützt, dass der Kurvenhebel (42) in einem vom Abstützbereich in Tragelastrichtung (t) entfernten Bereich an dem Befestigungsteil (2) in einer Schwenkebene parallel zur oder in Verschieberichtung (v) und Federachse (f) verschwenkbar gelagert ist und dass der Kurvenhebel (42) mit seiner Kurvenseitenfläche (13) an dem Lasttrageteil (3) verschieblich oder abrollbar anliegen.

11. Konstantträger nach Anspruch 10, **dadurch gekennzeichnet, dass** jedem Kurvenhebel (42) eine Lastrolle (49) zugeordnet ist und dass die Lastrollen (49) auf einer gemeinsamen Lastrollenachse (50) drehbar angeordnet sind.

12. Konstantträger nach einem der Ansprüche 1 bis 11, **gekennzeichnet durch** eine Einstellvorrichtung zur Einstellung einer Vorspannung der Hauptfederung (9).

13. Konstantträger nach Anspruch 12, **dadurch gekennzeichnet, dass** ein befestigungsseitig vorgesehenes Befestigungswiderlager (15) und/oder das Lastwiderlager (14) der Hauptdruckfedern (11) in Richtung der Federachse (f) verschiebbar und feststellbar angeordnet ist.

14. Konstantträger nach einem der Ansprüche 1 bis 13, **dadurch gekennzeichnet, dass** das Kurventeil (12) oder das Lasttrageteil (3) einen seitlichen dritten Führungsvorsprung aufweist, der sich senkrecht zur Federachse und zur Verschieberichtung durch einen im Befestigungsteil (2) vorgesehenen, in Richtung der Federachse verlaufenden dritten Führungsschlitz erstreckt und zu seiner Führung an den Innenseitenflächen des dritten Führungsschlitzes verschieblich anliegt.

## Claims

1. Constant bearer for moving loads, especially pipelines and similar, comprising a fastening part (2), a load-bearing part (3), and a spring system (4) located between the fastening part (2) and the load-bearing part (3) for generating a constant bearing force, where the spring system (4) displays a main spring assembly (9) absorbing the load and a compensating device (K) to compensate for changing spring forces of the main spring assembly (9) on the load-bearing part (3), wherein the compensating device (K) displays at least one cam part (12), in that the cam part (12) is coupled to the main spring assembly (9) and the load-bearing part (3) for load transmission from the main spring assembly (9) to the load-bearing part (3), and in that, when the load-bearing part (3) moves along the travel path (w), the load-bearing part (3) and the cam part (12) can move relative to each other on a non-linear path in such a way that complete compensation for the changing spring forces of the main spring assembly (9) on the load-bearing part (3) can be achieved, **characterised in that** the cam part (12) displays at least one lever, designed as a cam lever (42) and mounted on the fastening part (2) in pivoting fashion, with two opposite side faces in its longitudinal extension, a first side face (43) and a second side face (44), **in that** the load side of the main spring assembly (9) is mounted on the first side face (43) in pivoting fashion, or supported on it, and **in that** the second side face (44) is designed as a cam side face (13), on which the load-bearing part (3) rests in sliding or rolling fashion.

2. Constant bearer according to Claim 1, **characterised in that** the main spring assembly (9) displays a main compression spring assembly (9a) located roughly perpendicularly to the bearing force.

3. Constant bearer according to Claim 1 or 2, **characterised in that** the load-bearing part (3) displays a load roller (49) with an axis of rotation (d) perpendicular to the spring axis (f) and perpendicular to the bearing force direction (t), and **in that** the cam side face (13) rests on the load roller (49) in a plane perpendicular to the axis of rotation (d).

4. Constant bearer according to one of Claim 1 or 3, **characterised in that** the cam side face (13) rests on the load-bearing part (3) with an area that changes over the travel path (w) and is deflected, by a changing amount over the travel path, away from an end of the load-bearing part (3) for application of the load.

5. Constant bearer according to one of Claims 1 to 4, **characterised in that** the main compression spring assembly (9a) displays two main compression springs (11), the load sides of which act symmetrically on the load-bearing part (3).

6. Constant bearer according to Claim 9, **characterised in that** the main compression springs (11) are located on a common spring axis (f), and **in that** the main compression springs (11) lying opposite each other are supported on the cam part (12) on the load side and on the fastening part (2) on the fastening side.

7. Constant bearer according to Claim 6, **characterised in that** the cam part (12) is located between the main compression springs (11).

8. Constant bearer according to one of Claims 5 to 7, **characterised in that** the cam part (12) displays an associated cam side face (13) for each main compression spring (11).

9. Constant bearer according to one of Claims 5 to 8, **characterised in that** the cam part (12) is designed as a plate-like component with narrow side faces, where the two cam side faces (13) are formed by two opposite, mirror-symmetrically arranged narrow side faces.

10. Constant bearer according to Claim 5 to 9, **characterised in that** each main compression spring (11) has at least one cam lever (42) assigned to it, **in that** the main compression spring (11) is supported in a second load abutment (46) in a supporting area of the first side face (43) of the associated cam lever (42), **in that** the cam lever (42) is, in an area removed from the supporting area in the bearing force direction (t), mounted on the fastening part (2) in pivoting fashion in a pivoting plane parallel to or in the travel direction (v) and the spring axis (f), and **in that** the cam side face (13) of the cam lever (42) rests on the load-bearing part (3) in sliding or rolling fashion.

11. Constant bearer according to Claim 10, **characterised in that** a load roller (49) is assigned to each cam lever (42), and **in that** the load rollers (49) are located on a common load roller axle (50) in rotating fashion.

12. Constant bearer according to one of Claims 1 to 11, **characterised by** a setting device for setting a pre-tension of the main spring assembly (9).

13. Constant bearer according to Claim 12, **characterised in that** a fastening abutment (15) provided on the fastening side and/or the load abutment (14) of the main compression springs (11) is designed to slide and be fixed in position in the direction of the spring axis (f).

14. Constant bearer according to one of Claims 1 to 13, **characterised in that** the cam part (12) or the load-bearing part (3) displays a lateral, third guide projection that extends, perpendicularly to the spring axis and to the travel direction, through a third guide slit, provided in the fastening part (2) and running in the direction of the spring axis, and rests in sliding fashion on the inside surfaces of the third guide slit for guidance.

## Revendications

1. Support à force portante constante pour porter des charges se déplaçant, notamment destiné à des conduites et d'autres choses semblables, le support comprenant une pièce de fixation (2), une pièce porte-charge (3) et un système de ressort (4) disposé entre la pièce de fixation (2) et la pièce porte-charge (3) et destiné à la production d'une force portante restant constante, ledit système de ressort (4) comprenant une suspension à ressort principale (9) recevant la charge et un dispositif de compensation (K) pour la compensation de forces de ressort changeantes de la suspension à ressort principale (9) sur la pièce porte-charge (3), ledit dispositif de compensation comprenant au moins un élément de came (12), ledit élément de came (12) étant couplé à la suspension à ressort principale (9) et à la pièce porte-charge (3), pour la transmission de forces de la suspension à ressort principale (9) à la pièce porte-charge (3), et la pièce porte-charge (3) et l'élément de came (12) se pouvant mouvoir l'une par rapport à l'autre avec le déplacement de la pièce porte-charge (3) sur le chemin de déplacement (w), sur un chemin non linéaire de sorte qu'on peut obtenir une compensation complète des forces de ressort changeantes de la suspension à ressort principale (9) sur la pièce porte-charge (3), ***caractérisé* en ce que** l'élément de came (12) comporte au moins un levier formé comme un levier de came (42) supporté de manière pivotante sur la pièce de fixation (2) et présentant deux faces latérales opposées dans son étendue longitudinale, à savoir une première face latérale (43) et une deuxième face latérale (44), et **en ce que** la suspension à ressort principale (9) est supportée avec son côté de charge de manière pivotante contre la première face latérale (43) ou y prend appui, et en que la deuxième face latérale (44) est formée comme une face latérale de came (13) contre laquelle s'applique la pièce porte-charge (3) d'une manière déplaçable et roulante.

2. Support à force portante constante selon la revendication 1, **caractérisé en ce que** la suspension à ressort principale (9) comporte une suspension à ressort de pression principale (9a) disposée environ perpendiculairement par rapport à la force portante.

3. Support à force portante constante selon les revendications 1 ou 2, ***caractérisé* en ce que** la pièce porte-charge (3) comporte une poulie de charge (49) avec un axe de rotation (d) perpendiculaire à l'axe de ressort (f) et perpendiculaire à la direction de la force portante (t) et **en ce que** la face latérale de came (13) s'applique contre ladite poulie de charge (49) dans un plan perpendiculaire à l'axe de rotation (d).

4. Support à force portante constante selon l'une des revendications 1 à 3, ***caractérisé* en ce que** la face latérale de came (13) s'applique contre la pièce porte-charge (3) par une partie qui se change sur le chemin de déplacement (w) et qui est détournée d'une extrémité de la pièce porte-charge (3) destinée à disposer la charge, d'une valeur qui se change sur le chemin de déplacement.

5. Support à force portante constante selon l'une des revendications 1 à 4, ***caractérisé* en ce que** la suspension à ressort de pression principale (9a) comporte deux ressorts de pression principaux (11) agissant sur la pièce porte-charge (3) de manière symétrique par leur côté de charge.

6. Support à force portante constante selon la revendication 5, ***caractérisé* en ce que** les ressorts de pression principaux (11) sont disposés sur un axe de ressort (f) commun et **en ce que** les ressorts de pression principaux (11) opposés prennent appui sur l'élément de came (12) par leur côté de charge et sur la pièce de fixation (2) par leur côté de fixation.

7. Support à force portante constante selon la revendication 6, ***caractérisé* en ce que** l'élément de came (12) et arrangé entre les ressorts de pression principaux (11).

8. Support à force portante constante selon l'une des revendications 5 à 7, *caractérisé* en ce pour chacun des ressorts de pression principaux (11), ledit élément de came (12) présente une face latérale de came (13) attribuée.

9. Support à force portante constante selon l'une des revendications 5 à 8, ***caractérisé* en ce que** l'élément de came (12) est configuré comme un élément en forme de plaque avec des faces latérales étroites, les deux faces latérales de came (13) étant formées par deux faces latérales étroites opposées et disposées de manière symétrique par rapport au plan de miroir.

10. Support à force portante constante selon l'une des revendications 5 à 9, ***caractérisé* en ce que** chaque ressort de pression principal (11) comporte au moins un levier de came (42) associé, **en ce que** le ressort de pression principal (11), dans une zone d'appui de la première face latérale (4) de son levier de came (11) associé, prend appui dans une deuxième butée de charge (46), **en ce que** le levier de came (42) est logé sur l'élément de fixation (2) de manière pivotante dans un plan de pivotement parallèle à ou dans la direction de déplacement (v) et l'axe de ressort (f) et dans une zone écartée de la zone de support dans la direction du chargement (f), et **en ce que** le levier de came (42) s'applique contre la pièce porte-charge (3) de manière déplaçable ou roulante par sa face latérale de came (13).

11. Support à force portante constante selon la revendication 10, ***caractérisé* en ce que** chaque levier de came (42) comporte une poulie de charge (49) associée et **en ce que** les poulies de charge (49) sont disposées de manière rotative sur un axe commun (50) des poulies de charge.

12. Support à force portante constante selon l'une des revendications 1 à 11, ***caractérisé* par** un dispositif de réglage pour régler la prétension de la suspension à ressort principale (9).

13. Support à force portante constante selon la revendication 12, ***caractérisé* en ce qu'**une butée de fixation (15) prévue du côté de la fixation et/ou la butée de charge (14) des ressorts de pression principaux (11) sont disposées de manière déplaçable et fixable dans la direction de l'axe de ressort (f).

14. Support à force portante constante selon l'une des revendications 1 à 13, ***caractérisé* en ce que** l'élément de came (12) ou la pièce porte-charge (3) comporte un épaulement de guidage latéral qui s'étend verticalement à l'axe de ressort et à la direction de déplacement au travers une troisième fente de guidage prévue dans l'élément de fixation (2) et passant dans la direction de l'axe de ressort, et qui s'applique de manière déplaçable contre les faces intérieures de la troisième fente de guidage, en vue de son guidage.
